# EUROPEAN PATENT APPLICATION

(11) **EP 3 018 656 A1**
(43) Date of publication of application: **11.05.2016**
(21) Application number: 14306789.0
(22) Date of filing: 07.11.2014
(51) Int. Cl.: G11B 27/034, H04N 21/2743, H04N 21/2343, H04N 21/6587, H04N 21/854, H04N 21/658, H04N 21/8549, H04N 21/81

(54) **Method and device for processing data files**

(71) Applicant: Thomson Licensing, 92130 Issy-les-Moulineaux (FR)
(72) Inventor: Alleaume, Vincent, 35576 Cesson Sévigné (FR); Jouet, Pierrick, 35576 Cesson Sévigné (FR); Baillard, Caroline, 35576 Cesson Sévigné (FR)
(74) Representative: Browaeys, Jean-Philippe

(57) **Abstract**

A method for processing data files comprising uploading, from a user device to a remote server, a first time sequenced data file including media data; receiving a processed time sequenced data file generated from the first time sequenced data file, the processed time sequenced data file having a format compatible for rendering on the user device in time frames; and rendering, at the user device, media data of the processed time sequenced data file, wherein the media data is navigable at the user device frame by frame according to the time sequence and at least parts of the displayed media data are manipulable by the user though a user interface.

## Description

### TECHNICAL FIELD

The present invention relates to a method and device for processing data files. Particularly, the invention relates to a method and device for processing time-sequenced data files. The invention further relates to a method and a device for providing information for media data processing.

### BACKGROUND

In current acquisition hardware trends a wide variety of sensors are often embedded into mobile devices nowadays. Such sensors range from Infrared or color sensors and health and sport related sensors (for sport training for example) to multi arrays cameras,

In some cases the data sequence generated by such sensors cannot always be visualized on the device itself because of the complexity of the data sequence and require some additional processing software to be installed on the device for such purposes.

In addition to self-generated data, some data sequences acquired from various others devices (friends devices for instance) may be downloaded to a user device. Such downloaded data may require additional processing for its display.

The present invention has been devised with the foregoing in mind.

### SUMMARY

According to a first aspect of the invention there is provided a method for processing data files comprising: uploading, from a user device to a remote server, a first time sequenced data file including media data; receiving, from the remote server, a second time sequenced data file, the second time sequenced data file being generated from the first time sequenced data file and having a format compatible for rendering on the user device in time frames wherein said second time sequenced data file is less complex than the first time sequenced data file; and rendering, at the user device, media data of the second time sequenced data file, wherein the media data is navigable at the user device frame by frame according to the time sequence and at least parts of the displayed media data are manipulable by the user though a user interface, for selection for further processing by the remote server.

The second time sequenced data file may be less complex with respect to the first time sequenced data file in that the data size of the second time sequenced data file is inferior to the data size of the first time sequenced data file. For example, the second time sequenced data file may correspond to a subset of data of the first time sequenced data file. In one embodiment the second time sequenced data file is an avatar of the first time sequenced data file. The second time sequenced data file may comprise one or more avatars representative of the first time sequenced data file

In an embodiment the method includes generating one or more thumbnail objects from the media data of the second time sequenced file at user selected times of the rendered media data, each thumbnail object being associated with a media frame timestamp in accordance with the time sequence and a processing action to be performed at the server; transmission, to the remote server, of the thumbnail object and data representative of the processing action to be performed; and receiving, from the server, a processed time sequenced data time further processed at the server according to the action to be triggered and corresponding at least to the thumbnail object for rendering on the user device.

In an embodiment, the method includes selecting an area of the media data of the thumbnail object for processing at the remote server and transmitting data representative of the selected area to the remoter server.

In an embodiment the method includes annotating an image corresponding to the media frame associated with the thumbnail object to provide the data representative of the processing action to be performed and/or the selected area. Annotating the image may include for example drawing on the image, adding text to the image, adding, selecting or modifying graphical objects.

In an embodiment, the step of uploading is performed by at the user device via a web browser. The media data may be rendered on a web browser.

In an embodiment, the first time sequenced data file comprises video data multiplexed with corresponding depth data.

In an embodiment, the second time sequenced data file is compatible with the bandwidth between the user device and the remote server. The bandwidth corresponds to at least one of the bandwidth of the network linking the user device to the server. In an embodiment the second time sequenced file is compatible with the memory capability of the user device.

In an embodiment, time stamps of the second time sequenced data file correspond to time stamps of the first time sequenced data file.

According to a second aspect of the invention there is provided a method for processing data files comprising: receiving, from a remote user device, a first time sequenced data file including media data; generating from the first time sequenced data file, a second time sequenced data file, the second time sequenced file having a format compatible for rendering on the user device in time frames, enabling the user at the user terminal to navigate the media data frame by frame according to the time sequence; and transmitting to the user terminal the processed time sequenced file, said second time sequenced data file being less complex than the first time sequenced data file.

In an embodiment the method includes receiving processing data from the user terminal representative of: one or more thumbnail objects of the media data, each thumbnail object being associated with a media frame timestamp selected by the user; and a processing action to be performed at the server on data of the first time sequenced data file corresponding to the one or more thumbnail objects; processing the first time sequenced data file according to the action to be performed ;generating a user terminal compatible version of the processed first time sequenced data file for transmission to the user terminal.

In an embodiment, the first time sequenced data file comprises video data multiplexed with corresponding depth data.

In an embodiment, the second time sequenced data file is processed to be compatible with the bandwidth between the user device and the remoter server; and/or the memory capacity of the user device.

In an embodiment, time stamps of the second time sequenced data file correspond to time stamps of the first time sequenced data file.

A third aspect of the invention provides a user terminal comprising a display for rendering media data; a user interface for interacting with the rendered media data; a communication interface for uploading to a remote server, a first time sequenced data file including media data; and for receiving, from the remote server, a second time sequenced data file, the second time sequenced data file being generated from the first time sequenced data file and having a format compatible for rendering on the user device in time frames; and a media data renderer for rendering, at the user device, media data of the second time sequenced data file, wherein the media data is navigable at the user device frame by frame according to the time sequence and at least parts of the displayed media data are manipulable by the user through the user interface, and wherein said second time sequenced data file is less complex than the first time sequenced data file.

In an embodiment the second time sequenced data file comprises one or more avatars representative of the first time sequenced data file

In an embodiment the user terminal comprises one or more processors configured to generate one or more thumbnail objects from the media data of the second time sequenced file at user selected times of the rendered media data, each thumbnail object being associated with a media frame timestamp in accordance with the time sequence and a processing action to be performed at the server; and the communication interface is configured to transmit, to the remote server, the thumbnail object and data representative of the processing action to be performed; and to receive, from the server, a processed time sequenced data time further processed at the server according to the action to be triggered and corresponding at least to the thumbnail object for rendering on the user device.

In an embodiment the user interface is configured to select an area of the media data of the thumbnail object for processing at the remote server and the processor is configured to provide data representative of the selected area for transmission to the remote server.

In an embodiment the user interface is configured to annotate an image corresponding to the media frame associated with the thumbnail object to provide the data representative of the processing action to be performed and/or the selected area.

In an embodiment the user interface comprises a web browser for uploading the first time sequenced data file.

In an embodiment the first time sequenced data file comprises video data multiplexed with corresponding depth data.

In an embodiment the second time sequenced data file is compatible with the bandwidth between the user device and the remote server; and/or the memory capacity of the user device.

In an embodiment time stamps of the second time sequenced data file correspond to time stamps of the first time sequenced data file.

A fourth aspect of the invention provides a server for processing data files comprising: means for receiving, from a remote user device, a first time sequenced data file including media data; and one or more processors configured to generate from the first time sequenced data file, a second time sequenced data file, the second time sequenced file having a format compatible for rendering on the user device in time frames, enabling the user at the user terminal to navigate the media data frame by frame according to the time sequence; and a communication interface for transmitting to the user terminal the processed time sequenced file, wherein the processed time sequenced data file is less complex than the first time sequenced data file.

In an embodiment the communication interface is configured to receive processing data from the user terminal representative of one or more thumbnail objects of the media data, each thumbnail object being associated with a media frame timestamp selected by the user; and a processing action to be performed at the server on data of the first time sequenced data file corresponding to the one or more thumbnail objects; and the one or more processors are configured to process the first time sequenced data file according to the action to be performed and to generate a version of the processed first time sequenced data file compatible with the user terminal for transmission to the user terminal.

In an embodiment, the first time sequenced data file comprises video data multiplexed with corresponding depth data.

In an embodiment the one or more processors are configured to process the second time sequenced data file to be compatible with the bandwidth between the user device and the remote server and/or the memory capacity of the user device.

A fifth aspect of the invention provides a computer program product for a programmable apparatus, the computer program product comprising a sequence of instructions for implementing a method according to any embodiment of the invention when loaded into and executed by the programmable apparatus.

According to a sixth aspect of the invention there is provided a method of providing information for media data processing, the method comprising receiving, from a remoter server, second time sequenced media data compatible for rendering on a user terminal, the second time sequenced media data being generated from a first time sequenced media data file provided by the user terminal, and being less complex than the first time sequenced media data, generating, at the user terminal, one or more thumbnail objects at user selected times of the rendered second time sequenced media data, each thumbnail object being associated with a media frame timestamp in accordance with the user selected time of the time sequence, providing a processing action to be performed at the server; transmitting the thumbnail object and data representative of the processing action to be performed to the remote server; and receiving, from the server, a third time sequenced data for rendering on the user device, said third time sequenced data corresponding to the first time sequenced data further processed at the server according to the action to be performed and corresponding at least to the thumbnail object.

In an embodiment, the method includes selecting an area of the media data of the thumbnail object for processing at the remote server and transmitting data representative of the selected area to the remoter server.

In an embodiment, the method includes annotating an image corresponding to the media frame associated with the thumbnail object to provide the data representative of the processing action to be performed and/or the selected area.

According to a seventh aspect of the invention there is provided a method of processing media data wherein second time sequenced media data compatible for rendering on a user terminal is generated from a first time sequenced media data, the method comprising: receiving data representative of one or more thumbnail objects from the second time sequenced media data corresponding to user selected times of the rendered second time sequenced media data, each thumbnail object being associated with a media frame timestamp in accordance with the time sequence of the first time sequenced media data and data representative of a processing action to be performed at the server; processing at the server the first time sequenced media data in accordance with the processing action to be performed; and transmitting to the user terminal a third time sequenced data corresponding to the processed first time sequenced media, said third time sequenced data being compatible for rendering on the user terminal and corresponding at least to the one or more thumb nail objects.

According to a further aspect of the invention there is provided a user terminal for providing information for media data processing, the user terminal comprising a communication interface for receiving, from a remote server, second time sequenced media data compatible for rendering on a user terminal, the second time sequenced media data being generated from a first time sequenced media data and being less complex than the first time sequenced media data, one or more processors configured to generate one or more thumbnail objects from the second time sequenced media data at user selected times of the rendered media data, each thumbnail object being associated with a media frame timestamp in accordance with the time sequence and a processing action to be performed at the server; and wherein the communication interface is configured to transmit, to the remote server, the thumbnail object and data representative of the processing action to be performed; and to receive, from the server, a third time sequenced data for rendering on the user device, said third time sequenced data corresponding to the first time sequenced data further processed at the server according to the action to be performed and corresponding at least to the thumbnail object.

In an embodiment, the user terminal comprises a user interface for selecting an area of the media data of the thumbnail object for processing at the remote server, wherein the one or more processors are configured to provide data representative of the selected area and the communication interface is configured to transmit data representative of the selected area to the remoter server.

In an embodiment, the user interface is configured to enable a user to annotate an image corresponding to the media frame associated with the thumbnail object to provide the data representative of the processing action to be performed and/or the selected area.

According to a yet further aspect of the invention there is provided a server for processing media data wherein second time sequenced media data compatible for rendering on a user terminal is generated from a first time sequenced media data, the server comprising: a communication interface for receiving data representative of one or more thumbnail objects, each thumbnail object corresponding to a user selected time of the rendered second time sequenced media data, and being associated with a media frame timestamp in accordance with the user selected time of the time sequence of the first time sequenced media data and for receiving data representative of a processing action to be performed at the server; one or more processors configured to process the first time sequenced media data in accordance with the processing action to be performed; and transmitting to the user terminal a third time sequenced data corresponding to the processed first time sequenced media, said third time sequenced data being compatible for rendering on the user terminal and corresponding at least to the one or more thumb nail objects.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
FIG. 1 is a schematic block diagram of a data communication system in which one or more embodiments of the invention may be implemented;
FIG. 2 is a schematic block diagram of a user terminal in which one or more embodiments of the invention may be implemented;
FIG. 3 is a flow chart illustrating steps of a method for processing data files in accordance with an embodiment of the invention;
FIG. 4 is a flow chart illustrating steps of a method for providing information for remote data processing in accordance with an embodiment of the invention; and

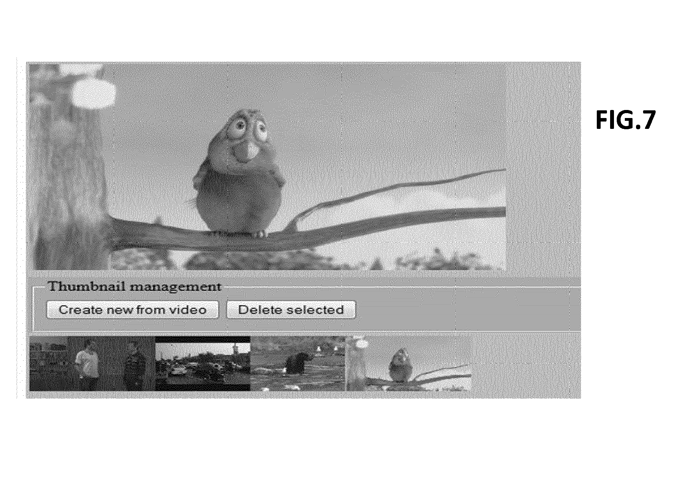

FIG. 5-7 are examples of user interface displays in accordance with embodiment of the inventions.

### DETAILED DESCRIPTION

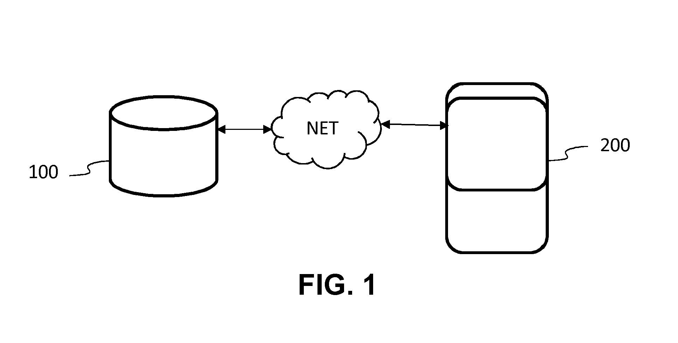

Figure 1 is a schematic block diagram of a data communication system in which one or more embodiments of the invention may be implemented. The data communication system 1000 comprises a server 100 connected via a network N to a user terminal 200. The network N may be a wireless network, a wired network or a combination of wired and wireless networks.

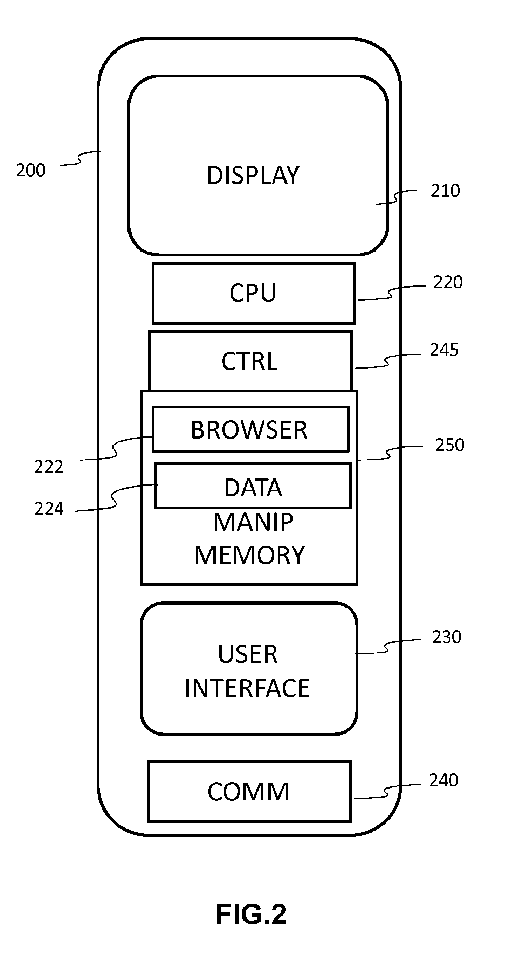

Figure 2 is a schematic block diagram of a user terminal in which one or more embodiments of the invention may be implemented. The user terminal 200 in this example is a mobile wireless communication device such as a smart phone or a tablet computer and comprises a display 210 for displaying media data, a processing module 220 comprising one or more processing units (CPUs), a user interface 230 for receiving user input and in some embodiments for providing output to the user, and a communication module 240 for wirelessly communicating with server 100 via network N. The user terminal comprises a memory controller 245 and memory 250. The one or more processing units 220 run various software programs and/or sets of instructions stored in the memory 250 to perform various functions for the user terminal and for executing applications for media data including a web browser application and a data manipulation application in accordance with embodiments of the invention to process data.

Software components stored in the memory include a browser module (or set of instructions) 222 and a data manipulation module (or set of instructions) 224. Other modules may be included such as an operating system module for controlling general system tasks (e.g. power management, memory management) and for facilitating communication between the various hardware and software components of the user terminal, and a communication module for controlling and managing communication with other devices via communication interface 240.

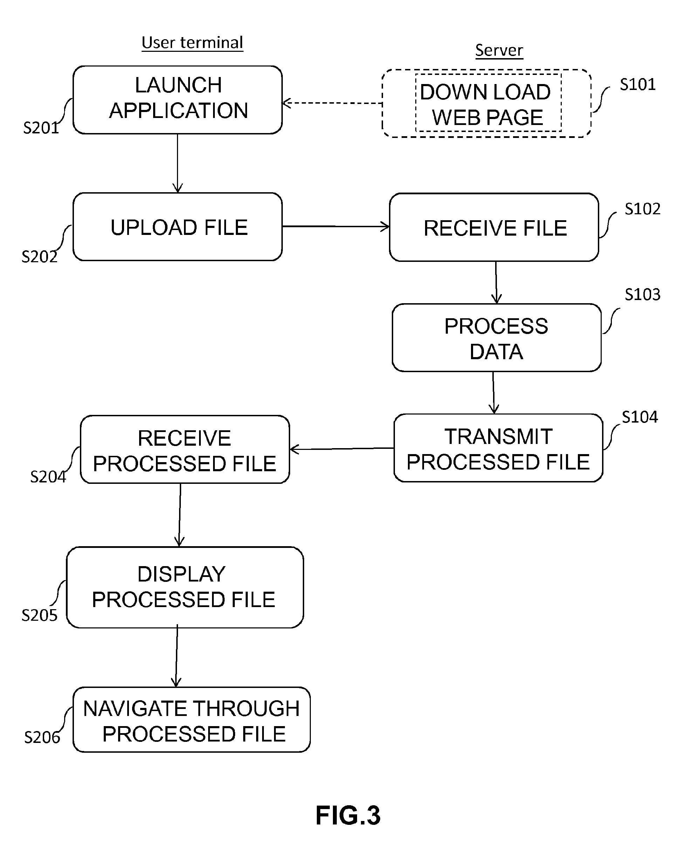

Figure 3 illustrates steps of a method for processing data files in accordance with an embodiment of the invention. In a step S201 an application for initiating the process is launched at the user terminal. This step S201 may involve a service web page being downloaded S101 from the server 100 for display in a web based browser of the user device. Indeed, one of the most common software on smartphones, laptops and desktops is certainly the web browser. Such devices are easily connectable connected to the internet, enabling access to any web services. Modern browsers compatible with the state-of-art web page standard and language (HTML5, Javascript) should for instance be able to render videos for specific - limited- video format (MP4, OGG, ...). In another embodiment, step S201 may include executing an application with a user interface and setting up a communication with the server 100. A complex time sequenced media file is selected at the user device 200 for upload to the server 100. The time sequenced media file may for example be media file containing multiplexed video and depth data organized in a time sequence. The time sequenced media file is uploaded to the server in step S202 and received at the server end in step S102. In step S103 at the server the uploaded time sequenced media file is processed to provide a corresponding time sequenced media file compatible for rendering on the user device. Processing by the server of the uploaded time sequenced media file may include one or more of the following processes:
- performing content recognition to determine the type of media content;
- extracting data flow;
- de multiplexing data in the case of multiplexed data, for example video data multiplexed with corresponding depth data;
- estimating server-user terminal bandwidth from the upload time,
- converting data to a different format to save memory size and bandwidth;
- building a media file (mp4 video for example) that may be easily paused during rendering, by generating for instance key-frames on a periodic basis, with respect to the rendering media content. The user in turn will be able to pause to a frame of his choice in an accurate way.

After processing, the processed time sequenced media file is downloaded to the user terminal in step S104. In some embodiments the processed time sequenced media file is an avatar of the first time sequenced media file. Time stamp information is included to enable the user to navigate through the processed time sequenced media file. The time stamp information may also be used in some embodiments of the invention to navigate through the original time sequenced media file. The relationship between the time stamps of the processed time sequenced media data and the time stamps of the original time sequenced media file is maintained. The user terminal receives the processed time sequenced media file S204 generated from the first time sequenced data file. The downloaded processed time sequenced media file has a format compatible for display on the user device in time frames. In step S205 the media data is rendered on the display of the user terminal. The displayed media data is navigable at the user device, frame by frame in step S206, according to the time sequence and at least parts of the displayed media data may be manipulated and optionally graphically annotated by the user through the user interface. The user may play and pause the rendering of the media display by means of the user interface.

An advantage provided by the process of embodiments of the invention is the transformation of an original data sequence which cannot be rendered on a user device due to its complexity into a corresponding data sequence which may be rendered on a user terminal without the need for extra software installation. This service enables a user to benefit from the server computational efficiency compared to the more limited computational efficiency of a common personal device such as a smart phone, tablet or laptop computer for instance. Account may be taken of the apparent bandwidth between the server and user device (service latency optimization). A less complex media file is generated enabling later smooth and optimum interaction while playing on the user device, whatever the original file data size.

In certain embodiments of the invention the linking of timestamps of the generated & displayable media file to the original data file flows, may be used to trigger more complex data processing to be executed on the full original data of the original time sequenced file at the server side, but controlled via its lighter avatar displayed on the user device screen.

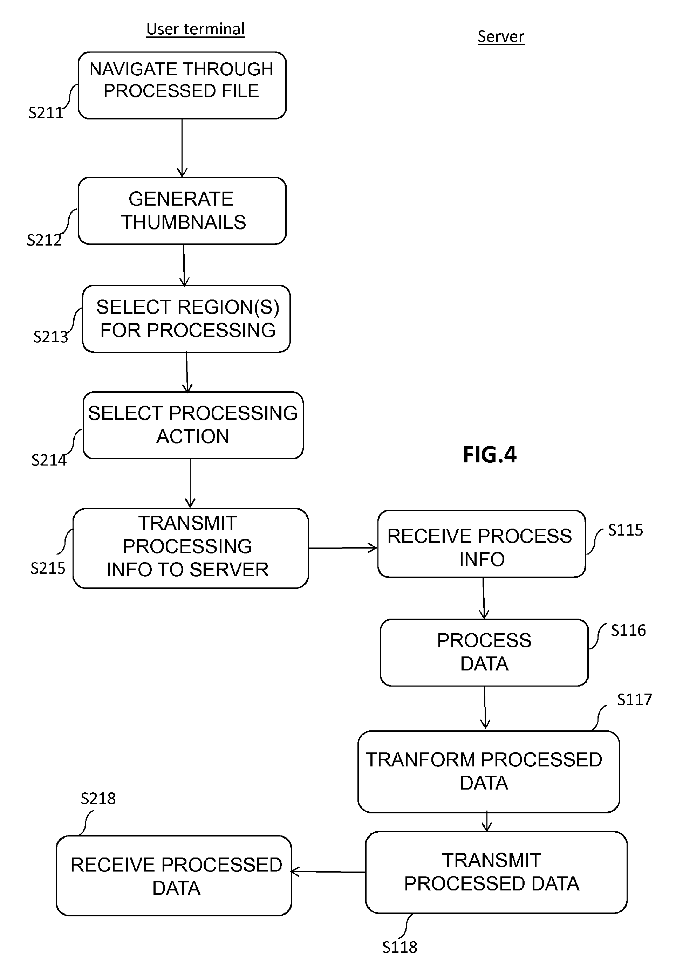

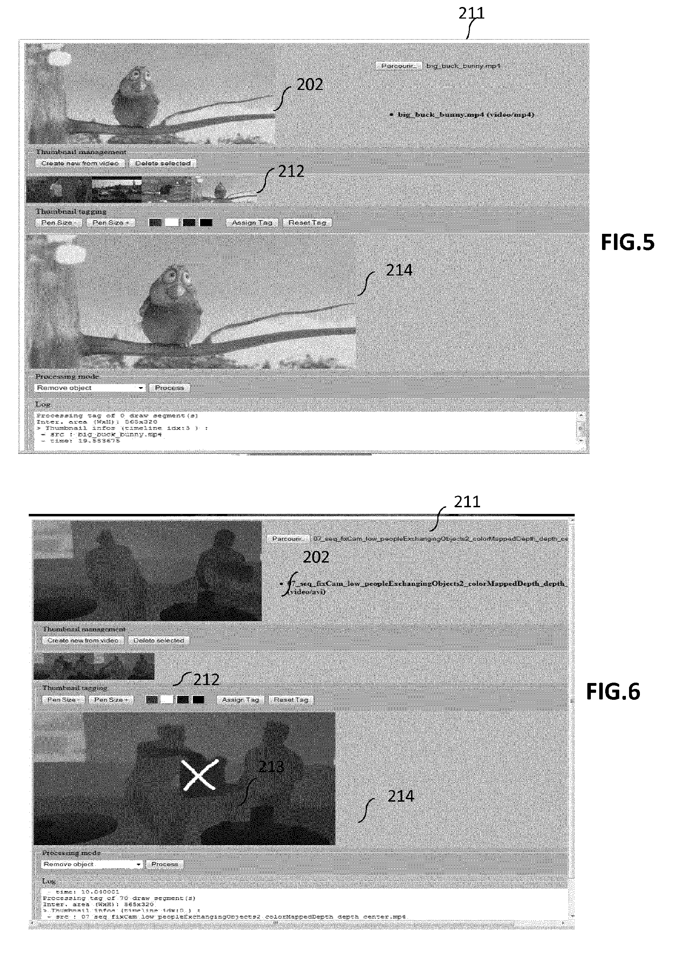

Figure 4 illustrates step of a method of controlling data processing in accordance with an embodiment of the invention. In a step S211 the processed time sequenced media file is displayed on the user terminal enabling the user to navigate through the time sequenced file. Figure 5 and 6 illustrate an example of user interface 211 displayed on the display 210 of the user terminal 200.

In step S212 a user, via the user interface, generates thumbnail objects from the displayed processed time sequenced media data at user selected times of the video. Each thumbnail object is a rescaled media frame associated with a media frame timestamp. The thumbnail object may also optionally comprise user annotation containing complementary indications, for example in the form of a set of graphical objects and/or color marks added by overlay onto the related frame 214 in accordance with the time sequence. Such a process may be referred to as thumbnail tagging Figure 6 shows a screen capture 214 of the displayed processed video data 202, displayed in step S205, for generating, potentially tagging a thumbnail object 212.

At least one processing action selected by the user to be performed at the server 100 on the original corresponding time sequenced media data may be associated with a thumbnail object. In some embodiments the processing action may be guided by complementary information provided for example by annotation of an area of an image 214 associated with the thumbnail object 212. The annotation may take the form of a drawing, addition or modification of a graphical object, text, an addition or change of colour. The annotated image is associated with the thumbnail object and may be sent to the server in the form of an image file. Some embodiments of the invention enable a user to use an approach similar to the use of video editing tools for thumbnail creation and thumbnail timeline use. In some particular embodiments drawing tools can be provided such as pen color selection, pen size, drawing tool to provide temporal and image area(s) information for the data processing to be performed to be performed at the server side on the data sequences present in the original uploaded file.

Figure 6 illustrates an example of the user interface 211 showing how a region 213 of the image 214 associated with the related thumbnail object 212 may be selected in step S213 for processing at the server side. In step S214 a processing action is selected for the server processing of the selected region. In some embodiments of step S214 may be performed at step S213 by selecting the region to be processed with a particular editing tool or using a particular colour associated with the action to be processed.

In step S215 data representative of the media data to be processed and the action to be executed is transmitted to the server.

In step S115 the server receives the process information data and processes in step S116 the original time sequenced data file associated with the media data to be processed in accordance with the action to be executed. In step S117 at the server the processed time sequenced media file is transformed into a corresponding time sequenced media file compatible with the user device. In step S118 the transformed further processed time sequenced media file is transmitted from the server for reception at the user interface in step S218.

Depending on the received processed data the user can trigger further processes to be performed on the media data at the server by any of steps S212 to S215. For example if the user wishes a different process to be performed on the same region of media data steps S214 and S215 may be repeated. If the user wishes a different region to be processed steps S213 to S215 may be repeated.

A particular example of an embodiment of the invention will now be described.

A user uploads to a server a depth+video sequence data file. Such a file, may be for example a file combining captured image data using an open source OPENNI library, generating a .ONI file type, multiplexing RGB or InfraRed data flow, and depth data, with possibly audio data also.

In this particular example the server may process the uploaded depth+video sequence file to generate a less complex (user terminal compatible for rendering) displayable media file by applying the following steps:
- the original .ONI file is split into separate DEPTH or IR with RGB data flow,
- the RGB data is then used to build the user terminal compatible media file to be presented to the user browser, still maintaining consistency between timestamps of the processed media file (which may be a type of 'avatar' video file of the original ONI file) and time stamps of the original uploaded file, with enough timestamps to enable pausing capability while playing the video at the user side.

- the user starts playing/pausing the user terminal compatible video file provided by the server, and generates thumbnails in a timeline by simply clicking on a functional button for that purpose on the user interface or directly on the video frame displayed on the user interface.
- each generated thumbnail is selected by the user to indicate a particular moment in the timeline of the video file, to be taken into account by a data processing process to be implemented at the server side
- each thumbnail is provided with descriptive text information (file) containing its frame timestamp and the original image size
- the user may optionally click on one or more of the thumbnails created in the thumbnail timeline for tagging. A conveniently rescaled view of the selected thumbnail is then displayed in a drawing area, and then the user can tag that thumbnail (for example by applying an overlay drawing):
- the user can create an overlay tag (sketch) linked to the thumbnail, i.e. by annotating (for example graphically or by text) on the image of the thumbnail. In some embodiments a particular colour may be used to indicate the process to be performed (for instance a black color could indicate "background" area, white could signify "foreground", red to signal an object part, ...)

Once the set of thumbnail(s) is created, with any associated annotation where appropriate, the user may trigger the processing step. It will be appreciated that in some embodiments of the invention the processing step could be triggered prior to the thumbnail creation step, or prior to the file upload step. For example by using contextual menus or dedicated options, like some specific color set for drawing for instance.

In one particular embodiment, a second window with selectable options is displayed to the user. The selected options may be related to selection of the processing algorithm, thereby enabling the user to choose additional processing dependent options, such as preview or full processing mode, visualize the returned results, and then trigger the launch of the data processing.

Processing is initiated by gathering and uploading, to the server, data indicative of the desired process to be performed at the server, data indicative of the media data to be processed including one or more timestamp(s) indicating the frame(s) and in some cases an area of interest of the frame. The server has access to the entire original data set (not only the displayable version of video content):

First a unique operation Id number is generated (at the user side), that will be part of the name of every file related to the current processing query. In one example this unique operation ID is generated using the date, or using aggregated hours/minutes/seconds/milliseconds of the process launch triggering time.

An instruction file is generated, containing:
∘ the process type / description,
∘ the last/current loaded user terminal compatible video file name (file 'avatar' of the server side data),
∘ an optional mode Id / description for the process type,
∘ optionally a unique operation Id number to use in file naming (to help to uniquely name any relatedfile generated at the server side, such as result(s) files)
∘ An option specifying if a full process is desired, or instead a preview mode; in the case of a preview, the process will focus only on original data close or equal to timestamp(s) of provided thumbnail(s), enabling faster or moment-focused processing previews
∘ The name of a resultant TXT file that will be generated on the server side once the requested process has terminated (this file may typically contain informative result text string, or even URIs - Unique Ressource Ident- of files generated from the process, such as video or image or sound file link(s) that the user browser may open and (dis)play from this moment)
∘ a number TC of generated thumbnails if any,
∘ TC lines, each containing:
   ▪ a vignette filename per generated thumbnail (giving details about this thumbnail and optional sketch/tag image)

Vignette files (textual content) are generated; The vignette files provide the media filename from which the thumbnail was generated, the related timestamp, its frame width and height. The vignette files include optional information such as:
- the name of a tag filename (a sketch image that includes drawings created by the user) if the user has created and associated one to that thumbnail,
- the width and height of the tag (to enable later sketch image rescaling on the server side)
- a hash value (MD5 for instance) of the tag content (helping a server to detect the reuse of unmodified tag(s) in subsequent requests with different identifiers)

The above mentioned sketch images indicating requested processing or selected image areas. The sketch image files may be generated as raw image data, or as common image(s) file types, such as JPEG or PNG image files (with compression or downscaling if desired.

Tables 1-3 present an example of a set of files to be uploaded to the web server that hosts the data processing algorithm(s). The exemplary fileset includes 1 processing Instruction file, with related thumbnail(s) descriptive files plus one associated (image) sketch file :

An example of an instruction file:

**Table 1 - INS_Proc_03_Id_135237401.txt**

| |
|---|
| ProcessTypeld: 3 |
| ProcessTypeDesc: Remove object |
| ProcessModeld: 0 |
| ProcessModeDesc: None |
| Operationld: 135237401 |
| PreviewComputationMode: true |
| ResultsFile: RES_Proc_03_Id_135237401.txt |
| ThumbnailsCount: 2 |
| file: vignette_Proc_03_Id_135237401_0.txt |
| file: vignette_Proc_03_Id_135237401_1.txt |

A first thumbnail description file including associated sketch image information :

**Table 2 - Vignette_Proc_03_Id_135237401_0.txt**

| |
|---|
| VideoFileName: animal_instincts_behindscenes.mp4 |
| TimeLocation: 1.8 |
| VideoFrameWidth: 320 |
| VideoFrameHeight: 240 |
| tagFileName: sketch_Proc_04_Id_182302811_0.raw |
| tagWidth: 425 |
| tagHeight: 320 |
| tagDataHash:FD43FE346A39F8651B1C801BB9DE7697 |

A second thumbnail description file (with no associated sketch image) :

**Table 3 - Vignette_Proc_03_Id_135237401_1.txt**

| |
|---|
| VideoFileName: animal_instincts_behindscenes.mp4 |
| TimeLocation: 0.425 |
| VideoFrameWidth: 320 |
| VideoFrameHeight: 240 |

In this particular example step S214 of Figure 4 includes uploading the set of files to trigger data processing at the server side. The set of files includes:
- INS_Proc_03_Id_135237401.txt,
- Vignette_Proc_03_Id_135237401_0.txt,
- Vignette_Proc_03_Id_135237401_1.txt,
- sketch_Proc_04_Id_182302811_0.raw

In step S115 the server detects the arrival of a new instruction file, and processes the received file with any other files if needed :

Any sketch image(s) are rescaled and analyzed regarding the related thumbnail information such as its timestamp (one sketch in our example),

The original time sequenced media data file may be used at the server side during this process, (for instance using additional depth information combined with color flow, to take advantage of user tagged image(s) to guide/enhance the processing execution (in one example a segmentation process can be applied that takes advantage of both depth and color flows, combined with user-provided area of interest information through color tagging, to improve results compared to a simple color-based segmentation),

Depending on the processing mode (preview or full process) the server generates outputs file(s) (image(s), video(s), textual information string(s)) and finally generate the result information text file that gathers links to these generated contents (as URIs, strings ...)

The user terminal detects the presence of the expected result file (its unique name was provided at triggering step) and -once downloaded- start parsing it, showing results and related files (feeding client browser page as usual browsing content)

Depending on the results, the user can trigger a new process (full mode if preview results was ok, for instance), or even try different tagging to see effect on processing results.

Embodiments of the invention provide a server-terminal system that enables interaction with a displayed video file, that plays the role of an avatar of the original, typically non displayable, dataset.

Moreover a bandwidth-saving approach is provided by minimizing the required data uploads and downloads (with adequate images downscaling used for tag images mentioned below and simple/small text file for timestamps and image size information delivering).

Embodiments of the invention enable a user to define and deliver both temporal and image-area(s) based clues that may be required when data processing algorithms are then applied to the data sequences. In one particular embodiment the method is applied to combined video plus depth data sequences processing, but it will be appreciated that it may be applied to any complex data flow multiplexed in a file

Although the present invention has been described hereinabove with reference to specific embodiments, the present invention is not limited to the specific embodiments, and modifications will be apparent to a skilled person in the art which lie within the scope of the present invention.

For instance, while the foregoing examples have been described with respect to video data it will be appreciated that the invention may be applied to other forms of data content such as for example time sequenced biomeasurement data

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method for processing data files comprising:
uploading, from a user device to a remote server, a first time sequenced data file including media data;
receiving, from the remote server, a second time sequenced data file, the second time sequenced data file being generated from the first time sequenced data file and having a format compatible for rendering on the user device in time frames wherein said second time sequenced data file is less complex than the first time sequenced data file; and
rendering, at the user device, media data of the second time sequenced data file, wherein the media data is navigable at the user device frame by frame according to the time sequence of the second time sequenced data file and at least parts of the displayed media data are manipulable by the user though a user interface, for selection for further processing by the remote server.

2. A method according to claim 1 wherein the second time sequenced data file comprises one or more avatars representative of media data of the first time sequenced data file

3. A method according to claim 1 or 2, further comprising:
generating one or more thumbnail objects from the media data of the second time sequenced file at user selected times of the rendered media data, each thumbnail object being associated with a media frame timestamp in accordance with the time sequence
providing a processing action to be performed at the server;
transmitting, to the remote server, the thumbnail object and data representative of the processing action to be performed; and
receiving, from the server, processed time sequenced data, the processed time sequenced data having been processed at the server according to the action to be triggered and corresponding at least to the thumbnail object for rendering on the user device.

4. A method according to any preceding claim further comprising selecting an area of the media data of the thumbnail object for processing at the remote server and transmitting data representative of the selected area to the remoter server.

5. A method according to claim 3 or 4 further comprising annotating an image corresponding to the media frame associated with the thumbnail object to provide the data representative of the processing action to be performed and/or the selected area.

6. A method according to any preceding claim, wherein the step of uploading is performed by at the user device via a web browser.

7. A method according to any preceding claim, wherein the first time sequenced data file comprises video data multiplexed with corresponding depth data.

8. A method according to any preceding claim wherein the second time sequenced data file is compatible with the bandwidth between the user device and the remote server; and/or the memory capacity of the user device.

9. A method according to any preceding claim, wherein time stamps of the second time sequenced data file correspond to time stamps of the first time sequenced data file.

10. A method for processing data files comprising:
receiving, from a remote user device, a first time sequenced data file including media data;
generating from the first time sequenced data file, a second time sequenced data file, the second time sequenced file having a format compatible for rendering on the user device in time frames, enabling the user at the user terminal to navigate the media data frame by frame according to the time sequence of the second time sequenced data file, wherein said second time sequenced data file is less complex than the first time sequenced data file; and
transmitting to the user terminal the processed time sequenced file.

11. A method according to claim 10, further comprising:
receiving processing data from the user terminal representative of:
one or more thumbnail objects of the media data, each thumbnail object being associated with a media frame timestamp selected by the user; and
a processing action to be performed at the server on data of the first time sequenced data file corresponding to the one or more thumbnail objects;
processing the first time sequenced data file according to the action to be performed
generating a version of the processed first time sequenced data file compatible with the user terminal for transmission to the user terminal.

12. A method according to claim 10 or 11, wherein the first time sequenced data file comprises video data multiplexed with corresponding depth data.

13. A method according to any one of claims 10 to 12 wherein the second time sequenced data file is processed to be compatible with the bandwidth between the user device and the remote server and/or the memory capacity of the user device.

14. A user terminal comprising :
a display for rendering media data;
a user interface for interacting with the rendered media data;
means for uploading to a remote server, a first time sequenced data file including media data;
means for receiving, from the remote server, a second time sequenced data file, the second time sequenced data file being generated from the first time sequenced data file and having a format compatible for rendering on the user device in time frames; wherein said second time sequenced data file is less complex than the first time sequenced data file; and
means for rendering, at the user device, media data of the second time sequenced data file, wherein the media data is navigable at the user device frame by frame according to the time sequence and at least parts of the displayed media data are manipulable by the user through the user interface.

15. A server for processing data files comprising:
means for receiving, from a remote user device, a first time sequenced data file including media data;
means for generating from the first time sequenced data file, a second time sequenced data file, the second time sequenced file having a format compatible for rendering on the user device in time frames, enabling the user at the user terminal to navigate the media data frame by frame according to the time sequence wherein said second time sequenced data file is less complex than the first time sequenced data file; and
means for transmitting to the user terminal the processed time sequenced file.
